# EUROPEAN PATENT APPLICATION

(11) **EP 1 746 323 A1**
(43) Date of publication of application: **24.01.2007**
(21) Application number: 05425538.5
(22) Date of filing: 22.07.2005
(51) Int. Cl.: F16L 3/237, F16L 3/22, F16L 3/223, F16L 3/13

(54) **Clamp for automotive application pipes**

(71) Applicant: Pres-Block S.P.A., 10040 Caselette (IT)
(72) Inventor: Nicolino, Aldo, 10040 Caselette (IT)
(74) Representative: D'Angelo, Fabio

(57) **Abstract**

It is described a clamp (1) for automotive application pipes (2) adapted to reciprocally arrange at least two pipes (2) in a respective predetermined position; the clamp (1) including at least two reception seats (6) of respective pipes (2); the seat (6) presenting at least one portion (15) of adhesive material or non-slip material to prevent the shifting of the respective pipe (2) relative to said seat (6) from said predetermined position.

## Description

The present invention relates to a perfected clamp for automotive application pipes.

It is known in the automotive sector the use of fluid conveying units, which include a plurality of pipes and are adapted to interact with equipment carried by the motor vehicles. For the conveying unit to work correctly, it is necessary that the pipes of each unit, once fastened to the motor vehicle, are reciprocally positioned in a particular configuration so to allow a correct interaction with the abovementioned equipments.

The abovementioned units are generally preassembled by means of a plurality of clamps which reciprocally connect at least two pipes and reciprocally position the same in the predetermined fastening configuration.

More precisely, the clamps of the known type include a plurality of seats having an elastically deformable open profile, which is snappingly coupled with the respective pipes.

It has been found that, during transportation, the pipes may slip angularly and axially with respect to the seats assuming a different conformation from the predetermined fastening one.

It is therefore necessary, in that case, to intervene to return the pipes to the original desired fastening configuration with consequent increase of assembly times and generation of further costs.

It is the object of the present invention to make a clamp for automotive application pipes, which allows to simply and cost-effectively solve the drawback related to the clamps of the known type.

The abovementioned object is achieved by the present invention being related to a clamp for automotive application pipes as defined in claim 1.

For a better understanding of the present invention, it will now be described a preferred embodiment by way of non-limitative example, and with reference to the accompanying drawings, in which:
figure 1 shows a perspective view of a clamp made according to the present invention;
figure 2 shows on a reduced scale a plurality of clamps of the type shown in figure 1 applied onto respective pairs of pipes; and
figures 3 and 4 are sections taken along line III-III in figure 1, in which the clamp according to the invention is shown in the condition of reception of the respective pipes and in condition of use, respectively.

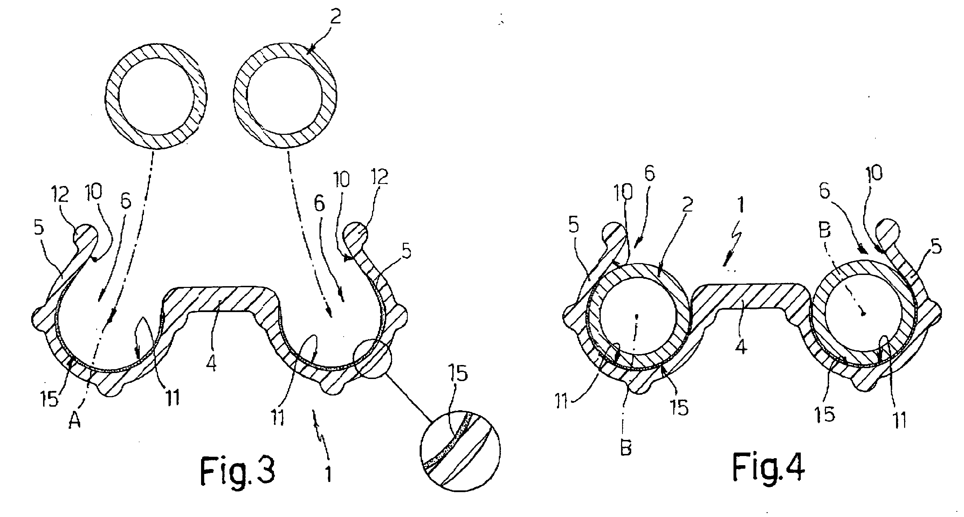

With reference to the accompanying drawings, it is shown as a whole with 1 a clamp adapted to reciprocally position a plurality of pipes 2, in the case in point two of which clamps having cylindrical conformation are shown, of a unit 3 (partially shown in figure 2) for conveying a fluid for automotive application.

In particular, the correct operation of the unit 3 requires that the pipes 2 are reciprocally positioned in a predetermined fastening configuration to a portion of the motor vehicle.

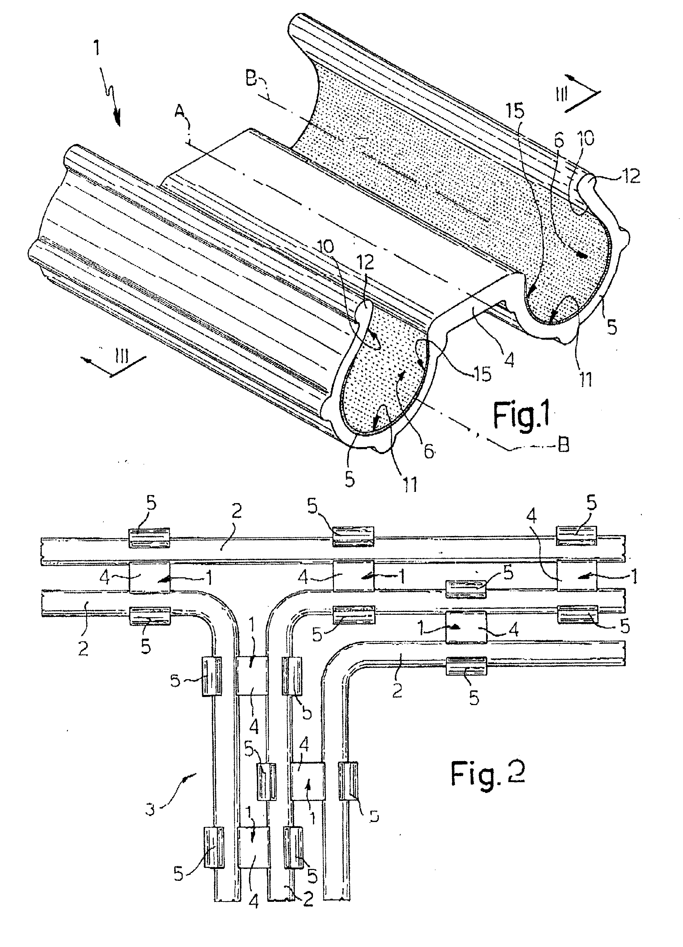

With particular reference to figure 1, the clamp 1 extends longitudinally according to its axis A, and includes integrally a central flat foil 4 and a pair of Ω-shaped curved walls 5, which extend symmetrically on radially opposite sides of the foil 4 with respect to the axis A.

Each wall 5 defines a respective reception recess 6 for a respective pipe 2; the recess 6, in particular, includes a lead-in zone 10 for allowing the entrance of the respective pipe 2 and a bottom zone 11 adapted to withhold the respective pipe 2.

More precisely, the bottom zone 11 is protrudingly extended from the foil 4, while the lead-in zone 10 originates from the bottom zone 11 in a radially more external position with respect to the position in which the aforesaid bottom zone 11 protrudes from the foil 4 and presents a free end 12.

In particular, the lead-in zone 10 presents a straight profile and is elastically retractable from the bottom zone 11 to allow the entrance of the pipe 2.

The bottom zone 11 presents an open circumferential arch profile to couple with a circumferential portion of the pipe 2.

More in particular, the profile of the bottom zone 11 presents a respective axis B parallel to the axis A and coinciding, in coupling condition, with a direction of extension of the pipe 2.

According to an important aspect of the present invention, each recess 6 is at least partially covered with adhesive or non-stick material 15 so as to prevent the shifting of the respective pipe 2 relatively to the recess 6 and to position the pipes 2 reciprocally in the predetermined fastening configuration.

More precisely, in the case in point shown, the adhesive material 15, for example glue, or non-stick material, for example a non-slip silicone rubber, is arranged in form of longitudinal layers having an arched profile and glued to the bottom zone 11.

In use, with particular reference to figure 2, the clamps 1 are used to reciprocally position the pipes 2 to the unit 3 in the predetermined fastening configuration.

More precisely, during a preassembly step of the unit 3, the clamps 1 are arranged at predetermined distances along the pipes 2 to connect the pipes 2 themselves, reciprocally in twos, and position them reciprocally in the predetermined configuration.

With particular reference to figures 3 and 4, each pipe 2 is made integral, by means of the material 15, with the bottom zone 11 of the respective recess 6 in a predetermined angular and axial position with respect to the axis B corresponding to the predetermined fastening configuration.

From an examination of the features of the clamp 1 made according to the present invention there are apparent the advantages that it allows to obtain.

In particular, the pipes 2 of the unit 3, once glued or fastened to the bottom zone 11 of the recesses 6, cannot slide angularly and axially with respect to the clamps 1.

Therefore, during the transportation steps, the pipes 2 of the unit 3 remain in the predetermined fastening configuration. Therefore, it is not necessary to intervene, after transportation, to return the pipes 2 to the fastening configuration, with evident saving of times and costs.

It is finally apparent that changes and variations can be implemented to the clamp 1 made according to the present invention without departing from the scope of protection of the claims.

## Claims

1. A clamp (1) for automotive application pipes (2) adapted to reciprocally arrange at least two pipes (2) in a respective predetermined position; said clamp (1) including at least two reception seats (6) of respective pipes (2);
**characterised in that** each seat (6) presents at least one portion (15) of adhesive or non-stick material to prevent the shifting of the respective pipe (2) relative to said seat (6) from said predetermined position.

2. A clamp (1) according to claim 1, **characterised in that** said portion (15) fully covers a coupling zone (11) of said seat (6) with said pipe (2).
